# EUROPEAN PATENT SPECIFICATION

(11) **EP 3 686 300 B1**
(45) Date of publication and mention of the grant of the patent: **03.04.2024**
(21) Application number: 20159890.1
(22) Date of filing: 01.08.2018
(51) Int. Cl.: C22B 26/12, C22B 3/22, C22B 7/00, B01D 9/00, H01M 10/54, B01D 11/04

(54) **SODIUM REMOVAL METHOD, LITHIUM CONCENTRATING METHOD, AND LITHIUM RECOVERY METHOD**
NATRIUMENTFERNUNGSVERFAHREN, LITHIUMKONZENTRIERUNGSVERFAHREN UND LITHIUMRÜCKGEWINNUNGSVERFAHREN
PROCÉDÉ D'ÉLIMINATION DE SODIUM, PROCÉDÉ DE CONCENTRATION DE LITHIUM ET PROCÉDÉ DE RÉCUPÉRATION DE LITHIUM

(30) Priority: 02.08.2017 JP 2017150165; 02.08.2017 JP 2017150166
(43) Date of publication of application: 29.07.2020
(62) Divisional of application: 18840703.5
(73) Proprietor: JX Metals Corporation, Tokyo 105-8417 (JP)
(72) Inventor: ARIYOSHI, Hirotaka, Hitachi-shi, Ibaraki 317-0056 (JP); TOMITA, Isao, Hitachi-shi, Ibaraki 317-0056 (JP); ABE, Hiroshi, Hitachi-shi, Ibaraki 317-0056 (JP)
(74) Representative: Arnold & Siedsma

(56) References cited:
- CN-A- 106 629 787
- REDDY S T ET AL: "Recovery of Na"2SO"4.10H"2O from a reverse osmosis retentate by eutectic freeze crystallisation technology", CHEMICAL ENGINEERING RESEARCH AND DESIGN, ELSEVIER, AMSTERDAM, NL, vol. 88, no. 9, 1 September 2010 (2010-09-01), pages 1153-1157, XP027252198, ISSN: 0263-8762 [retrieved on 2010-01-18]
- NAYL A A ET AL: "Acid leaching of mixed spent Li-ion batteries", ARABIAN JOURNAL OF CHEMISTRY, ELSEVIER, AMSTERDAM, NL, 12 April 2014 (2014-04-12), XP085107565, ISSN: 1878-5352, DOI: 10.1016/J.ARABJC.2014.04.001

## Description

### TECHNICAL FIELD

The present invention relates to a method for removing sodium from a sodium-containing solution containing a sodium ion. More particularly, the present invention proposes a technique capable of effectively removing sodium without any significant loading. The present invention also relates to a lithium concentrating method for increasing a concentration of lithium ions in a lithium-containing solution containing a sodium ion and lithium ions to be concentrated, and a lithium recovery method using the same. More particularly, the present invention proposes a technique capable of effectively concentrating lithium ions to be concentrated in a short period of time and improving a recovery process of lithium.

### BACKGROUND ART

Metal recovery methods include a dry method of melting and recovering a metal, and a wet method of dissolving a metal in a solution such as an acid to recover the metal(s).

The wet method is generally carried out by separating and recovering the dissolved metal (metal ion) by precipitating it in the form of metal or compound from the solution.

Here, for example, when the metal-dissolved solution is acidic, sodium salts are used as alkalis for pH adjustment and neutralization. The most typical alkali is sodium hydroxide, among others. When such a sodium salt is used, the solution will contain a large amount of a sodium ion.

The solution containing a large amount of the sodium ion causes a problem that for example, when a target metal is concentrated and recovered by solvent extraction, sodium is also extracted into the solvent to inhibit concentration of the target metal.

In CN-A-106629787 a preparation method is described of cell-grade lithium hydroxide wherein a mix of lithium sulfate solution and sodium hydroxide solution are mixed and then frozen to obtain lithium hydroxide freezing liquid. This liquid is treated in subsequent steps to obtain lithium hydroxide.

Reddy et al. (Chemical Engineering Research and Design, Vol. 88, Issue 9, Sept 2010, pages 1153-1157, `Recovery of Na2SO4.10H2O from a reverse osmosis retentate by eutectic freeze crystallisation technology') have studied the removal of sodium from waste water and effluent from South Africa's mining industry by reverse osmosis.

In Nayl et al. (Arabian Journal of Chemistry, Vol. 10, Supplement 2, May 2017, pages S3632-S2639, `Acid leaching of mixed spent Li-ion batteries') acid leaching for different types of mixed spent Li-ion mobile batteries is carried out after alkali decomposition using NH4OH followed by H2SO4 + H2O2 leaching.

CN-A-104944447 describes a method for preparing battery grade lithium hydroxide monohydrate, which comprises the following steps: purification of lithium sulfate solution, freezing separation, preparation of lithium hydroxide monohydrate crude products, dissolution and purification of the lithium hydroxide monohydrate crude products and recrystallization.

For example, as an example of a method for recovering a metal by the wet method as described above, a method for recovering lithium from lithium ion battery scrap by the wet method generally removes a harmful electrolyte by roasting the lithium ion battery scrap, and then carries out crushing and sieving in this order, and then adding battery powder obtained under a sieve of the sieving to a leaching solution to leach it, and dissolves lithium, nickel, cobalt, manganese, iron, copper, aluminum, and the like in the solution.

Subsequently, among the metal elements dissolved in the leached solution, iron, copper, aluminum and the like are sequentially or simultaneously removed to recover valuable metals such as cobalt, manganese and nickel. More particularly, the leached solution is subjected to solvent extraction neutralization at a plurality of stages depending on the metals to be separated, and further, each solution obtained at each stage is subjected to stripping, electrolysis, carbonation or other As a result, a lithium-containing solution containing a lithium ion is obtained.

### SUMMARY OF INVENTION

### Technical Problem

In the method of recovering the metal by the wet method as described above, if a large amount of sodium is contained in the solution during the process, sodium is mixed into lithium carbonate finally generated for the recovery of lithium to reduce the purity of lithium carbonate. In this case, a step of purifying lithium carbonate to remove sodium is required. Therefore, a lower concentration of sodium in the solution is desirable.

Conventional sodium removal methods for decreasing the sodium concentration in the solution include, for example, a method of using an adsorbent or performing electrodialysis, as well as a method of simply reducing the sodium concentration by bleeding off. However, there is a problem that the method of using the adsorbent or performing electrodialysis is expensive. Bleeding-off may be carried out as a last resort for decreasing the sodium concentration.

By the way, in order to effectively recover lithium from a lithium-containing solution obtained by the wet method for recovering the metal or the like, the lithium-containing solution is preferably concentrated to increase the lithium ion concentration. When concentrating the lithium ion and other metal ions in a metal-containing solution such as the above lithium-containing solution, it is considered that solvent extraction or resin adsorption is carried out, or concentration is carried out by heating.

However, in the solvent extraction and the resin adsorption, influences of other metal components that may be contained in the metal-containing solution cannot be ignored, and depending on coexisting components, the concentration may not be efficiently and effectively achieved. Further, in the concentration by heating, the heating cost is greatly increased, and the heat treatment requires a long period of time, which causes a problem in terms of efficiency, as well as other components such as a sodium ion which may be contained in addition to the lithium ion will be concentrated, for example.

The present invention has been made in view of such problems. An object of the present is to provide a sodium removal method capable of effectively removing a sodium ion in a sodium-containing solution to allow a sodium concentration of the sodium-containing solution to relatively easily decreased.

Another object of the present invention is to provide a lithium concentrating method capable of effectively concentrating lithium ions to be concentrated, at a relatively low cost and in a short period of time, and to provide a lithium recovery method using the same.

### Solution to Problem

As a result of intensive studies for decreasing the sodium concentration in the sodium-containing solution, the present inventors have focused on other ions such as a sulfate ion that may be contained in the sodium-containing solution, and found that the other ions and the sodium ion form a sodium salt(s) depending on a temperature of the solution.

The invention is defined in the appended claims.

In the lithium recovery method according to the present invention, a molar ratio of the lithium concentration to the sodium concentration (Li/Na molar ratio) in a separated solution obtained in the solid-liquid separation step is preferably larger than a molar ratio of the lithium concentration to the sodium concentration in the metal-containing solution before the sodium precipitating step.

### Advantageous Effects of Invention

According to the sodium removal method of the present invention, the sodium salt is intentionally precipitated by the sodium precipitating step of decreasing the temperature of the sodium-containing solution so that the sodium concentration in the sodium-containing solution exceeds the solubility of the sodium salt, and then removing it, thereby enabling sodium to be effectively removed without significant loading.

In the lithium concentration method according to the present invention, the sodium precipitating step of precipitating the sodium salt having crystal water by decreasing the temperature of the lithium-containing solution so that the sodium concentration in the lithium-containing solution exceeds the solubility of the sodium salt intentionally precipitate the sodium salt having crystal water and then remove it, so that an apparent amount of the solution is decreased with the removal of the sodium salt. This increases the concentration of the lithium ions to be concentrated, an amount of which does not change before and after the step, so that the lithium ions can be efficiently concentrated at a relatively low cost.

### BRIEF DESCRIPTION OF DRAWINGS

FIG. 1 is a flowchart showing a sodium removal method according to an embodiment of the present invention.
FIG. 2 is a flowchart showing a metal concentrating method.
FIG. 3 is a graph showing a change in a sodium concentration as a function of a solution temperature in Reference Example 1.
FIG. 4 is a graph showing a change in a lithium concentration as a function of a solution temperature in Reference Example 2.
FIG. 5 is a graph showing a change in a sodium concentration as a function of a solution temperature in Reference Example 2.

### DESCRIPTION OF THE PREFERRED EMBODIMENTS

Hereinafter, embodiments of the present invention will be described in detail.

### <Sodium Removal Method>

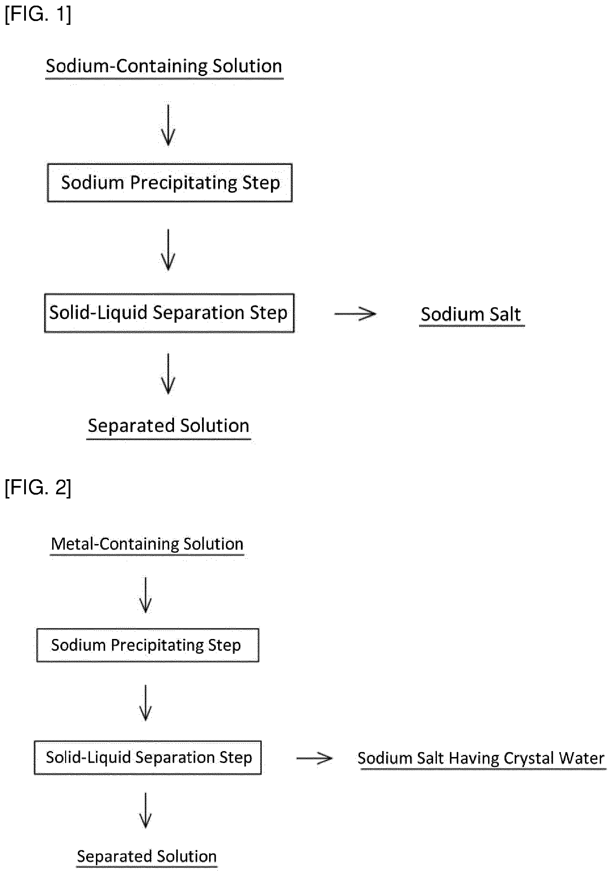

As illustrated in FIG. 1, in order to remove sodium from a sodium-containing solution, a sodium removal method according to an embodiment of the present invention includes: a sodium precipitating step of decreasing a temperature of the sodium-containing solution so that a sodium concentration in the sodium-containing solution exceeds solubility of a sodium salt at that temperature to precipitate the sodium salt; and then a solid-liquid separation step of removing the precipitated sodium salt by solid-liquid separation.

### (Sodium-Containing Solution)

The present invention can be applied to any sodium-containing solution as long as it contains at least the sodium ion.

The sodium-containing solution can suitably result from a wet treatment of lithium-ion secondary battery scrap, for example, battery powder obtained by sequentially carrying out roasting, crushing, sieving and other required treatments for lithium-ion secondary batteries discarded due to the life of the battery product, manufacturing defects or other reasons. Specifically, the wet treatment includes leaching of the battery powder in an acidic leaching solution such as sulfuric acid or hydrochloric acid or other mineral acid, followed by a multiple-stage solvent extraction or neutralization for the leached solution, and various solutions obtained after separating iron, aluminum, manganese, cobalt, nickel, and the like in a recovery step of performing the solvent extraction or neutralization can be used as a sodium-containing solution.

Preferably, the sodium-containing solution is a sulfuric acid solution. This is because, as described later, in the sodium precipitating step, sodium sulfate can be precipitated to remove it more effectively. Before and/or during the sodium precipitating step, sulfuric acid may also be added to the sodium-containing solution.

When the sodium-containing solution contains sulfuric acid, its concentration is preferably from 30 g/L to 330 g/L, and more preferably 50 g/L to 190 g/L as a sulfate ion concentration.

The sodium concentration in the sodium-containing solution is, for example, from 1.0 g/L to 80.0 g/L, typically 20.0 g/L or more, and more typically 40.0 g/L to 60.0 g/L. It is effective that such a sodium-containing solution containing a relatively high concentration of the sodium ion is subjected to sodium removal. An excessively low sodium concentration in the sodium-containing solution may decrease a temperature leading to the solubility at the time when sodium is to be removed by cooling in the sodium precipitating step as described below. In some cases, that temperature may be below freezing, and the target solution itself may solidify. On the other hand, an excessively high sodium concentration may increase an amount of the sodium salt generated in the sodium precipitating step, and it is thus concerned that a loss of the components to be recovered to adhesive water in the solid-liquid separation step is relatively increased.

The sodium-containing solution further contains a lithium ion in addition to the sodium ion. This is because the lithium is effectively recovered after removing sodium as described later. When the sodium-containing solution contains the lithium ion, the lithium concentration in the sodium-containing solution is, for example, from 0.1 g/L to 40.0 g/L, typically from 2.0 g/L to 20.0 g/L, and more typically from 5.0 g/L to 12.0 g/L. A molar ratio of the lithium concentration to the sodium concentration in the sodium-containing solution is preferably larger than 0.08. The higher the Li/Na molar ratio, the higher the lithium recovery rate when recovering lithium carbonate as described below.

A pH of the sodium-containing solution before the sodium precipitating step as described blew is, for example, in a range of an acid concentration region to 13, typically from 1 to 5.

### (Sodium Precipitating Step)

The sodium ion in the sodium-containing solution as described above may be unintentionally precipitated as a sodium salt in the subsequent certain step. Further, for example, if lithium carbonate is to be produced when recovering lithium from the sodium-containing solution, the lithium carbonate will contain a considerable amount of sodium, so that the purity of lithium carbonate will be decreased and burdens on purification of lithium carbonate will be increased. Therefore, it is desirable to remove the sodium ion in the sodium-containing solution in advance. On the other hand, conventionally, this is addressed by strict control of the pH and periodic removal of a sodium concentrated solution. However, this leads to a loss of other metal components to be recovered.

Therefore, an embodiment of the present invention carries out a sodium precipitating step of precipitating a sodium salt by decreasing a temperature of the sodium-containing solution to a predetermined lower temperature. When the temperature of the sodium-containing solution is being decreased, the sodium salt begins to be precipitated as the sodium concentration in the sodium-containing solution exceeds the solubility of the predetermined sodium salt which is a solute, depending on an amount of a solvent of the sodium-containing solution. Accordingly, after the sodium ion in the sodium-containing solution is sufficiently precipitated as a sodium salt by such a decrease in the temperature, it can be removed in the solid-liquid separation step as described below, so that sodium contained in the sodium-containing solution can be effectively removed without any large burden. Further, when sodium is an inhibitory component in the extraction operation or the like, the method according to this embodiment reduces the sodium concentration, so that the recovery rate of the metal components to be recovered can be improved. The solution temperature can be returned to the predetermined temperature after the solid-liquid separation step.

In the sodium precipitating step, the sodium salt precipitated due to a decrease in the temperature of the sodium-containing solution is, for example, at least one selected from the group consisting of sodium sulfate, sodium sulfate heptahydrate and sodium sulfate decahydrate, although it depends on the type of the sodium-containing solution. When the sodium-containing solution is the sulfuric acid acidic solution, sodium sulfate is precipitated in a form having crystal water, so that there is an advantage that an apparent amount of the solution is decreased and other components are relatively concentrated. Also, in this case, the sulfate ion in the sodium-containing solution is also decreased, so that it is effective when it is desired to remove the sulfate ion.

It is preferable that in the sodium precipitating step, a target temperature when the temperature of the sodium-containing solution is decreased is 10 °C or lower. If the temperature is higher than 10 °C, the precipitation of the sodium salt may be insufficient.

On the other hand, since the sodium salt is more precipitated as the temperature is decreased, any preferable lower limit of the target temperature is not limited in terms of a precipitation amount of the sodium salt. However, if the temperature is excessively decreased, the target solution itself may solidify. Therefore, the target temperature is preferably 0 °C or higher. According to the invention, the temperature of the sodium-containing solution is decreased to 0 °C to 10 °C. Even more preferably, the temperature of the sodium-containing solution is decreased to 3 °C to 7 °C.

A cooling rate for decreasing the temperature of the sodium-containing solution can be from 0.5 °C/min to 2.0 °C/min. If the rate is too high, a temperature may be too decreased locally and the solution may solidify. Also, if it is too slow, the resulting sodium salt will be coarse, and the solution will be involved during the precipitation, possibly resulting in a loss of the components to be recovered. The cooling rate is an average value of rates that can be calculated from the solution temperatures measured at an interval of one minute and from the time intervals.

Once the temperature of the sodium-containing solution reaches the target temperature, the target temperature can be maintained for 60 to 180 minutes from the time when the temperature reaches the target temperature. If the retention time is shorter, the precipitation of the sodium salt may be insufficient. On the other hand, if the retention time is longer, the precipitated sodium salt leads to crystal growth. In this case, it will entrain the solution, possibly resulting in a loss of the components to be recovered.

When cooling and maintaining the sodium-containing solution at the predetermined low temperature, the sodium-containing solution can be stirred as needed. This can lead to fine crystals of the precipitated sodium salt, so that the loss of the components to be recovered due to a decrease in entrainment of the solution is reduced. The stirring speed at this time can be, for example, from about 300 rpm to 600 rpm, but it may vary depending on the apparatus or the like. Therefore, the stirring speed is not limited to this range, and the stirring may be preferably carried out as strong as possible.

A cooling apparatus for decreasing the temperature of the sodium-containing solution is preferably made of a material having a relatively high thermal conductivity while at the same time a solution contacting portion can withstand properties of the sodium-containing solution. However, various known cooling apparatuses may be used.

### (Solid-Liquid Separation Step)

After precipitating the sodium salt in the above sodium precipitating step, solid-liquid separation is carried out using a known device or method such as a filter press and a thickener to remove the solid sodium salt to obtain a separated solution. Accordingly, the sodium concentration of the separated solution will preferably be 40 g/L or less, and more preferably 30 g/L or less.

On the other hand, when the lithium ion is contained in the sodium-containing solution, almost no lithium ion is precipitated in the sodium precipitating step, so that most of the lithium is contained in the state of a ion dissolved in the separated solution. The lithium concentration in the separated solution is preferably from 10 g/L to 40 g/L, and more preferably from 20 g/L to 30 g/L. Thus, in the embodiment of the present invention, sodium is effectively removed, while lithium is not substantially removed, so that the loss of lithium recovery in recovering lithium can be suppressed. It is preferable that a molar ratio of the lithium concentration to the sodium concentration in the separated solution is larger than a molar ratio of the lithium concentration to the sodium concentration in the sodium-containing solution before the sodium precipitating step.

A pH of the separated solution is, for example, generally from an acidic concentration region to 13, typically from 1 to 4.

The sodium precipitating step and the solid-liquid separation step may be either continuous processing or batch processing.

### (Recovery of Lithium)

The separated solution obtained through the sodium precipitating step and the solid-liquid separation step as described above can be subjected to a carbonation treatment in order to recover lithium contained in the separated solution. Here, the lithium ion in the separated solution is recovered as lithium carbonate by adding a carbonate salt to the separated solution or blowing a carbon dioxide gas into the separated solution.

After the addition of the carbonate salt or the blowing of the carbon dioxide gas, for example, the solution temperature is in a range of from 20 °C to 50 °C, and maintained for a certain period of time optionally with stirring.

The carbonate salt to be added to the separated solution includes sodium carbonate, ammonium carbonate and the like. Sodium carbonate is preferred in terms of the recovery rate. An amount of the carbonate salt added can be, for example, from 1.0 to 1.7 times, preferably from 1.2 to 1.5 times, the molar amount of Li. The amount of the carbon dioxide gas added can be, for example, from 1.0 to 1.7 times, preferably from 1.2 to 1.5 times, the molar amount of Li.

When the carbonate salt is added, the carbonate salt is preferably added to the separated solution as a solid without being dissolved in water or the like. This is because when the carbonate salt is dissolved and added as a solution, an amount of the solution increases by the added fraction, so that an amount of lithium carbonate dissolved increases, leading to a loss of lithium.

It is preferable that a pH of the separated solution during carbonation is relatively high, such as from 10 to 13. If the carbonate salt is added in a state of a lower pH, it will escape as a carbon dioxide gas, so that a reaction efficiency may be decreased.

Lithium carbonate thus obtained does not contain sodium because sodium has been removed in the sodium removal step as stated above, and it will have higher purity. The lithium quality of lithium carbonate is at least 17%, and preferably at least 18%.

If the lithium quality of lithium carbonate is lower than a predetermined value, the lithium carbonate can be purified to obtain lithium carbonate having higher quality. The purification can be carried out by a generally known technique.

### <Metal Concentrating Method>

As illustrated in FIG. 2, the metal concentrating method includes: a sodium precipitating step of precipitating a sodium salt having crystal water by decreasing a temperature of a metal-containing solution in order to increase a concentration of metal ions to be concentrated, which are contained in the metal-containing solution, so that a sodium concentration in the metal-containing solution exceeds solubility of a sodium salt at that temperature; and then a solid-liquid separation step of removing the precipitated sodium salt by solid-liquid separation.

### EXAMPLES

Next, aspects of the present invention were experimentally implemented, and its effects were confirmed as described below. However, the descriptions herein are only for the purpose of illustration, and are not intended to be limited.

### <Reference Example 1: Sodium Removal Method>

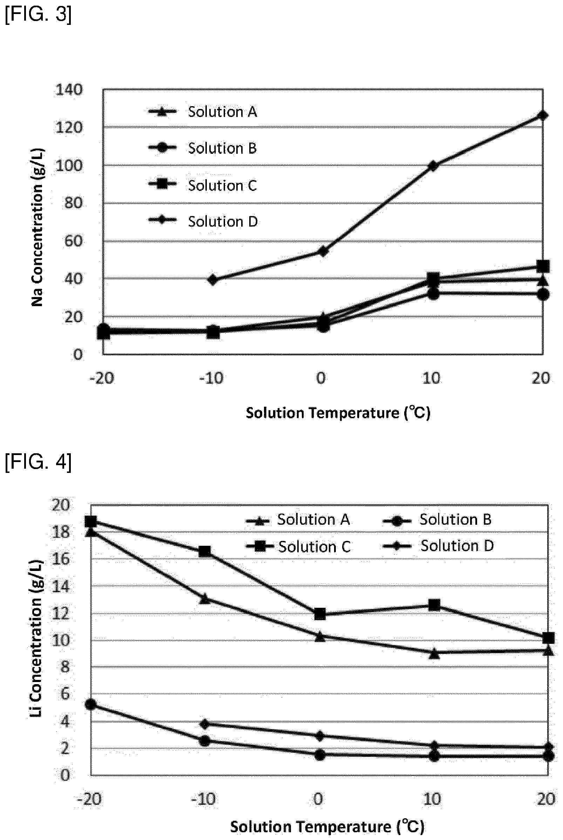

Four solutions A to D of sodium-containing solutions (sulfuric acid solutions) each having mainly different sodium concentrations were prepared. Each of the solutions A to D was gradually cooled to 20 °C, 10 °C, 0 °C, -10 °C, and -20 °C, and was maintained for one hour from the time when each target temperature was reached. During the maintaining, stirring was carried out. The sodium concentration was measured at each of the above temperatures during cooling. The results are shown by a graph in FIG. 3. After cooling and maintaining, solid-liquid separation was carried out to remove the precipitated sodium salt. In FIG. 3, the solution D is only showed for the sodium concentrations at the tempratures from 20 °C to -10 °C, because the solution solidified at a lower temperature and so any sample could not be obtained.

As shown in FIG. 3, the sodium concentration of each of the solutions A to D was gradually decreased with a decrease in the temperature, indicating that the sodium ion was effectively precipitated as a sodium salt. In particular, it was found that when the temperature was decreased between 0 °C to 10 °C, the sodium concentration became sufficiently low.

Therefore, according to the sodium removal method of the present invention, it was found that the sodium ion of the sodium-containing solution can be effectively remove to achieve a decrease in the sodium concentration in the sodium-containing solution by a relatively simple method.

### <Reference Example 2: Lithium Concentrating Method>

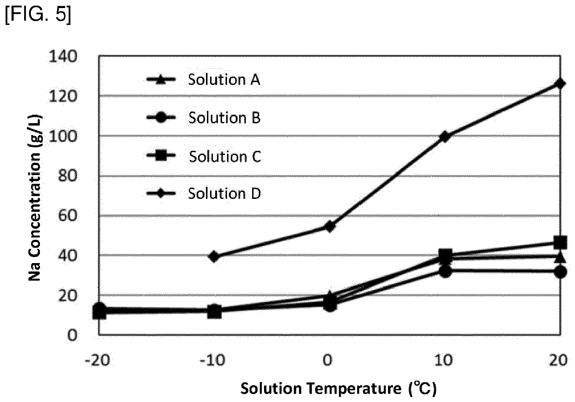

Four solutions A to D of the metal-containing solutions (sulfuric acid solutions) each containing a lithium ion and a sodium ion, which mainly had different metal ion concentrations, were prepared. Each of the solutions A to D was gradually cooled to 20 °C, 10 °C, 0 °C, -10 °C, and -20 °C, and was maintained for one hour from the time when each target temperature was reached. During the maintaining, stirring was carried out. The lithium concentration and sodium concentration were measured at each of the above temperatures during cooling. The results are shown by a graph in FIGS. 4 and 5, respectively. After cooling and maintaining, solid-liquid separation was carried out to remove the precipitated sodium salt. In FIGS. 4 and 5, the solution D is only shown for the concentrations at 20 °C to -10 °C, because the solution solidified at a lower temperature and so any sample could not be obtained.

As can be seen from FIGS. 4 and 5, as the solution temperature was lower, the lithium concentration was higher and the sodium concentration was lower. Further, the solution amount was also measured, confirming that lithium was not decreased from the weight calculated by multiplying the lithium concentration by the solution amount. On the other hand, an amount of sodium was decreased, indicating that the sodium ion was precipitated in the form of sodium sulfate, so that the sodium concentration was decreased.

In view of the foregoing, it was found that the metal concentrating method according to the present invention could effectively increase the concentration of metal ions to be concentrated.

## Claims

1. A lithium recovery method, comprising recovering lithium using a lithium concentrating method for increasing a concentration of lithium ions in a lithium-containing solution containing a sodium ion and lithium ions to be concentrated, the lithium concentrating method comprising:
a sodium precipitating step of precipitating the sodium ion in the lithium-containing solution as a sodium sulfate, wherein a temperature of the lithium-containing solution is decreased to 0°C to 10 °C to precipitate a sodium sulfate hydrate; and a solid-liquid separation step of removing the precipitated sodium sulfate hydrate by solid-liquid separation after the sodium precipitating step to obtain a separated solution,
wherein the separated solution is subjected to a carbonation treatment to recover the lithium ions in the separated solution as lithium carbonate and a lithium quality of the lithium carbonate is at least 17%.

2. The lithium recovery method according to claim 1, wherein the lithium concentrating method comprises adding sulfuric acid to the lithium-containing solution before the sodium precipitating step and/or during the sodium precipitating step.

3. The lithium recovery method according to claim 1 or 2, wherein the lithium-containing solution has a sodium concentration of 20.0 g/L or more.

4. The lithium recovery method according to any one of claims 1 to 3, wherein the lithium-containing solution comprises a lithium-containing solution obtained by a wet treatment of lithium ion secondary battery scrap.

5. The lithium recovery method according to claim 4, wherein the lithium-containing solution comprises a lithium-containing solution obtained by leaching a battery powder of a lithium ion secondary battery scrap in a sulfuric acid leaching solution, followed by a multiple-stage solvent extraction or neutralization for a leached solution to separate iron, aluminium, manganese, cobalt and nickel.

6. The lithium recovery method according to any of claims 1 to 5, wherein the lithium-containing solution has a lithium concentration of from 0.1 g/L to 40.0 g/L.

7. The lithium recovery method according to any of claims 1 to 6, wherein the lithium-containing solution has a molar ratio of the lithium concentration to the sodium concentration of larger than 0.08.

8. The lithium recovery method according to any one of claims 1 to 7, wherein a molar ratio of the lithium concentration to the sodium concentration in a separated solution obtained in the solid-liquid separation step is larger than a molar ratio of the lithium concentration to the sodium concentration in the lithium-containing solution before the sodium precipitating step.

## Patentansprüche

1. Ein Lithium-Rückgewinnungsverfahren, aufweisend die Rückgewinnung von Lithium unter Verwendung eines Lithium-Konzentrationsverfahrens zur Erhöhung einer Konzentration von Lithium-Ionen in einer lithiumhaltigen Lösung, welche Natrium-Ionen und zu konzentrierende Lithium-Ionen enthält, wobei das Lithium-Konzentrationsverfahren folgende Schritte aufweist:
einen Natriumausfällungsschritt zum Ausfällen der Natriumionen in der lithiumhaltigen Lösung in Form von Natriumsulfat, wobei, um Natriumsulfathydrat auszufällen, die Temperatur der lithiumhaltigen Lösung auf 0°C bis 10°C gesenkt wird; und
einen Fest-Flüssig-Trennschritt zum Entfernen des ausgefällten Natriumsulfathydrats durch Fest-Flüssig-Trennung nach dem Natriumausfällungsschritt, um eine abgetrennte Lösung zu erhalten, wobei die abgetrennte Lösung einer Carbonisierungsbehandlung unterzogen wird, um die Lithiumionen in der abgetrennten Lösung in Form von Lithiumcarbonat zu gewinnen, wobei die Reinheit des Lithiumcarbonats mindestens 17% beträgt.

2. Das Lithium-Rückgewinnungsverfahren nach Anspruch 1, wobei das Lithium-Konzentrationsverfahren das Zugeben von Schwefelsäure zu der lithiumhaltigen Lösung vor dem Natriumausfällungsschritt und/oder während des Natriumausfällungsschritts umfasst.

3. Das Lithium-Rückgewinnungsverfahren nach Anspruch 1 oder 2, wobei die lithiumhaltige Lösung eine Natriumkonzentration von 20,0 g/L oder mehr aufweist.

4. Das Lithium-Rückgewinnungsverfahren nach einem der Ansprüche 1 bis 3, wobei die lithiumhaltige Lösung eine lithiumhaltige Lösung umfasst, welche durch eine Nassbehandlung von Lithiumionen-Sekundärbatterieschrott erhalten wird.

5. Das Lithium-Rückgewinnungsverfahren nach Anspruch 4, wobei die lithiumhaltige Lösung eine lithiumhaltige Lösung umfasst, die durch Auslaugen eines aus Lithiumionen-Sekundärbatterieschrott gewonnenen Batteriepulvers in einer schwefelsauren Auslaugungslösung erhalten wird, gefolgt von einer mehrstufigen Lösungsmittelextraktion oder Neutralisation für eine ausgelaugte Lösung, um Eisen, Aluminium, Mangan, Kobalt und Nickel abzutrennen.

6. Das Lithium-Rückgewinnungsverfahren nach einem der Ansprüche 1 bis 5, wobei die lithiumhaltige Lösung eine Lithiumkonzentration von 0,1 g/L bis 40,0 g/L aufweist.

7. Das Lithium-Rückgewinnungsverfahren nach einem der Ansprüche 1 bis 6, wobei die lithiumhaltige Lösung ein Molverhältnis der Lithiumkonzentration zur Natriumkonzentration von mehr als 0,08 aufweist.

8. Das Lithium-Rückgewinnungsverfahren nach einem der Ansprüche 1 bis 7, wobei das Molverhältnis der Lithiumkonzentration zur Natriumkonzentration der im Fest-Flüssig-Trennschritt erhaltenen abgetrennten Lösung größer ist, als das Molverhältnis der Lithiumkonzentration zur Natriumkonzentration in der lithiumhaltigen Lösung vor dem Natriumausfällungsschritt.

## Revendications

1. Procédé de récupération de lithium, comprenant la récupération du lithium en utilisant un procédé de concentration de lithium pour augmenter une concentration en ions de lithium dans une solution contenant du lithium contenant un ion de sodium et des ions de lithium à concentrer, le procédé de concentration de lithium comprenant :
une étape de précipitation de sodium consistant à précipiter l'ion de sodium dans la solution contenant du lithium sous forme de sulfate de sodium, dans lequel une température de la solution contenant du lithium est diminuée jusqu'à 0°C à 10°C pour précipiter un hydrate de sulfate de sodium ; et une étape de séparation solide-liquide consistant à éliminer l'hydrate de sulfate de sodium précipité par séparation solide-liquide après l'étape de précipitation de sodium pour obtenir une solution séparée,
dans lequel la solution séparée est soumise à un traitement de carbonatation pour récupérer les ions de lithium dans la solution séparée sous forme de carbonate de lithium et une qualité de lithium du carbonate de lithium est d'au moins 17 %.

2. Procédé de récupération de lithium selon la revendication 1, dans lequel le procédé de concentration de lithium comprend l'ajout d'acide sulfurique à la solution contenant du lithium avant l'étape de précipitation de sodium et/ou pendant l'étape de précipitation de sodium.

3. Procédé de récupération de lithium selon la revendication 1 ou 2, dans lequel la solution contenant du lithium présente une concentration en sodium de 20,0 g/l ou plus.

4. Procédé de récupération de lithium selon l'une quelconque des revendications 1 à 3, dans lequel la solution contenant du lithium comprend une solution contenant du lithium obtenue par un traitement par voie humide d'un déchet de batterie secondaire au lithium-ion.

5. Procédé de récupération de lithium selon la revendication 4, dans lequel la solution contenant du lithium comprend une solution contenant du lithium obtenue par la lixiviation d'une poudre de batterie d'un déchet de batterie secondaire au lithium-ion dans une solution de lixiviation à base d'acide sulfurique, suivie d'une extraction par solvant ou neutralisation en plusieurs étapes pour une solution lixiviée pour séparer le fer, l'aluminium, le manganèse, le cobalt et le nickel.

6. Procédé de récupération de lithium selon l'une quelconque des revendications 1 à 5, dans lequel la solution contenant du lithium présente une concentration en lithium de 0,1 g/l à 40,0 g/l.

7. Procédé de récupération de lithium selon l'une quelconque des revendications 1 à 6, dans lequel la solution contenant du lithium présente un rapport molaire de la concentration en lithium par rapport à la concentration en sodium supérieur à 0,08.

8. Procédé de récupération de lithium selon l'une quelconque des revendications 1 à 7, dans lequel un rapport molaire de la concentration en lithium par rapport à la concentration en sodium dans une solution séparée obtenue dans l'étape de séparation solide-liquide est supérieur à un rapport molaire de la concentration en lithium par rapport à la concentration en sodium dans la solution contenant du lithium avant l'étape de précipitation de sodium.
